# EUROPEAN PATENT SPECIFICATION

(11) **EP 4 155 047 B1**
(45) Date of publication and mention of the grant of the patent: **09.07.2025**
(21) Application number: 22805747.7
(22) Date of filing: 28.03.2022
(51) Int. Cl.: B29C 45/06, B29C 45/16, B29C 45/33

(54) **MOLD FOR INJECTION MOLDING, INJECTION MOLDING DEVICE, AND INJECTION MOLDING METHOD**
FORM ZUM SPRITZGIESSEN, SPRITZGIESSVORRICHTUNG UND SPRITZGIESSVERFAHREN
MOULE POUR MOULAGE PAR INJECTION, DISPOSITIF DE MOULAGE PAR INJECTION, ET PROCÉDÉ DE MOULAGE PAR INJECTION

(30) Priority: 24.05.2021 JP 2021086657
(43) Date of publication of application: 29.03.2023
(73) Proprietor: Sansyu Precision Co., Ltd., Takahama-shi, Aichi 4441321 (JP)
(72) Inventor: SUMIYA Kazuhiko, Takahama-shi Aichi 4441321 (JP); HORI Takamasa, Takahama-shi Aichi 4441321 (JP)
(74) Representative: RavensPAT Patentanwälte Partnerschaft mbB
(86) International application number: PCT/JP2022/015050
(87) International publication number: WO 2022/249725

(56) References cited:
- EP-A1- 1 717 459
- CN-A- 103 753 761
- CN-A- 108 527 773
- CN-U- 206 614 761
- JP-A- 2002 264 170
- JP-A- 2012 152 928
- JP-A- 2012 152 928
- US-A1- 2009 092 699

## Description

### TECHNICAL FIELD

The present invention relates to an injection molding technique for manufacturing a molded body by two-color molding.

### BACKGROUND ART

Conventionally, there have been proposed an interdental brush molding method including primary molding of injecting a hard material to integrally mold a main body portion including a hand grip portion, a stem portion, and a core portion, and secondary molding of injecting a soft material to mold a brush portion including a large number of brush bristles on an outer peripheral portion of the core portion of the main body portion, and a molding device (Patent Document 1), and a molding device of an ear pick in which a scraping portion is formed of a flexible material softer than a grip portion (Patent Document 2).

The device described in Patent Document 1 includes: a fixed mold; a movable mold; and a molding jig provided on a parting surface side of the movable mold. A concave portion for molding the main body portion is formed on a primary molding side, and a concave portion for molding the brush portion is formed on a secondary molding side. The molding jig is configured to be rotatable by 180° in a state of protruding from the parting surface of the movable mold by a necessary amount, executes an operation of protruding the main body portion from the primary molding concave portion, rotating to a secondary molding position, and accommodating the main body portion in the secondary molding concave portion, and the molding jig includes first and second jig members symmetrical about a drive shaft, so that the primary molding and the secondary molding can be performed substantially simultaneously.

In the molding device of Patent Document 1, the molding concave portion is formed so as to extend in a direction orthogonal to the rotation axis of the molding jig along the parting surface, and in the fixed mold, a primary molding sprue for injecting a hard material is formed in a second partial molding concave portion of the hand grip portion, and a soft material injection sprue is formed in a brush part molding recess.

The device described in Patent Document 2 includes: a pair of core bodies each having a primary molding cavity formed on an upper surface thereof and having a concave portion in a side surface portion corresponding to the primary molding cavity; a slide core; and a back core. In mold opening, the slide core is slid by an angular pin, and at the same time, a lower plate is slid by an air cylinder, so that an upper block and a lower block are slid on inclined surfaces thereof, and the upper plate is moved in the upward direction. In conjunction with this, the back core is moved in the upward direction to form one surface side of the secondary molding cavity.

### PRIOR ART DOCUMENTS

### PATENT DOCUMENTS

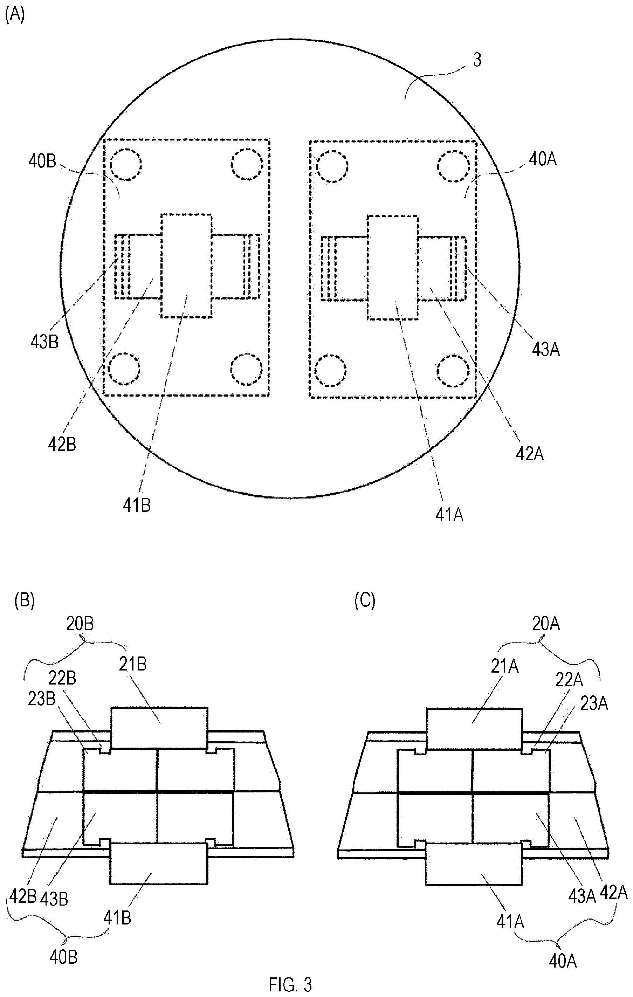

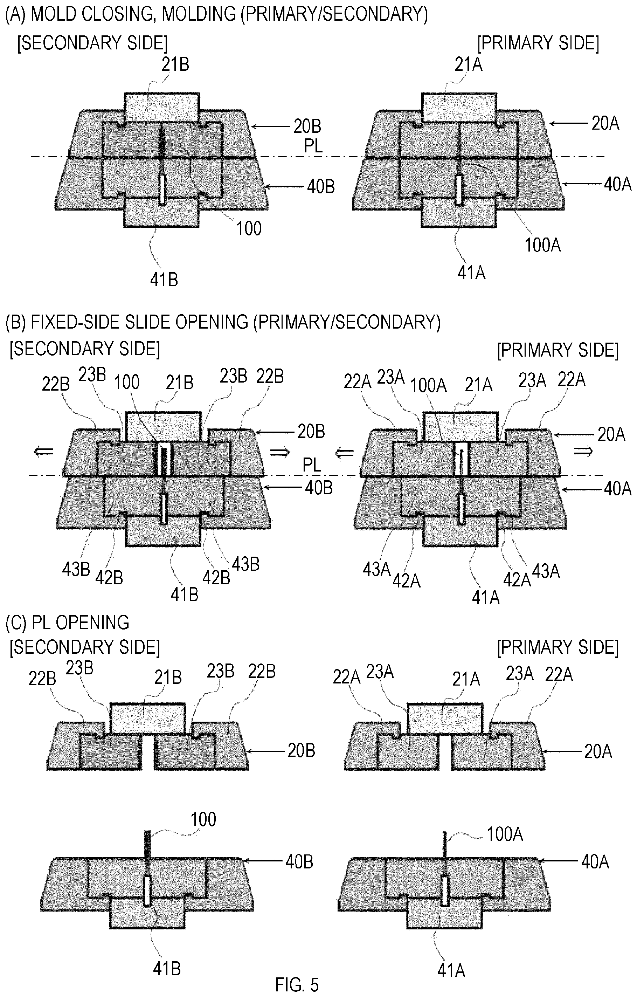

Patent Document 1: JP 2012-152928 A (paragraphs 0015 to 0031, and Fig. 3 and Fig. 5)
Patent Document 2: JP 2015-19876 A (paragraphs 0039 to 0043, and Fig. 12 to Fig. 17)

### SUMMARY OF THE INVENTION

### PROBLEMS TO BE SOLVED BY THE INVENTION

A problem such as an increase in size of the mold, or the like, is concerned when a larger number of molded bodies is to be manufactured with the molding devices of Patent Documents 1 and 2.

Therefore, an object of the present invention is to provide an injection molding mold, an injection molding device, and an injection molding method capable of manufacturing a large number of two-color molded bodies in an efficient manner without increasing the size of the mold.

### MEANS FOR SOLVING THE PROBLEMS

An injection molding mold of the present invention made to achieve the above object is an injection molding mold for manufacturing a two-color molded body, the injection molding mold including a fixed mold and a movable mold that are separated at a parting surface, the fixed mold and the movable mold being respectively provided on a primary side on which primary molding with a first resin is performed and on a secondary side on which secondary molding with a second resin is performed, wherein after the movable mold on the primary side separated at the parting surface is caused to face the fixed mold on the secondary side and the movable mold on the secondary side is caused to face the fixed mold on the primary side, clamping is performed and the second resin is injected so as to cover a partial surface of a primary molded body formed of the first resin, the injection molding mold further including the following configurations:
(1A) the fixed mold and the movable mold each including slide cores configured to open and close along the parting surface, each of the slide cores being provided with, in a mating surface in a clamped state, a recess configured to form a cavity extending in a direction orthogonal to the parting surface; and
(1B) a portion configured to inject the second resin being provided in the recess in the slide core of the fixed mold.

In the injection molding mold according to the present invention, the fixed mold and the movable mold each include slide cores configured to open and close along the parting surface, each of the slide cores being provided with, in a mating surface in a clamped state, a recess configured to form a cavity extending in a direction orthogonal to the parting surface, and a portion configured to inject the second resin is provided in the recess in the slide core of the fixed mold. As a result, after the primary molding is finished, only the slide core of the fixed mold is opened and the slide core of the movable mold is kept closed, so that the mold opening can be executed while the primary molded body is held in a state of extending in the direction orthogonal to the parting surface by the slide core of the movable mold. In this state, the clamping is performed after the movable mold on the primary side is caused to face the fixed mold on the secondary side, so that the primary molded body can be set in the cavity for the secondary molding without taking out the primary molded body. In mold opening after the secondary molding has been completed, on the secondary side, the secondary molded body can be taken out by opening the slide cores on both the fixed side and the movable side. Thus the movable mold from which the secondary molded body has been taken out and the slide core of which is opened is caused to face the fixed mold on the primary side and the movable mold is closed, and the slide core of each mold on the fixed side and the movable side is closed, whereby the primary molding can be executed again.

Here, the injection molding mold of the present invention may further include the following configuration:
(2) the primary molded body including: a shaft member extending in a direction orthogonal to the parting surface; and a bulging portion bulging from a part of the shaft member, and a recess configured to encapsulate the bulging portion being formed in the mating surface between the slide cores of the movable mold.

With the injection molding mold having the aforementioned configuration, it is possible to move the primary molded body held by the slide core of the movable mold to the secondary molding position without falling off.

In addition, the injection molding mold of the present invention may further include the following configuration:
(3) the primary molded body including a plurality of the shaft members, and the bulging portion being a connecting member that connects the shaft members along the parting surface.

With the injection molding mold having the aforementioned configuration, a plurality of two-color molded bodies formed by melting and solidifying the second resin on a part of the shaft member formed of the first resin can be simultaneously molded in a connected manner with the connecting member. Even when the number of two-color molded bodies is increased, the cavity only needs to be formed to extend in the direction orthogonal to the parting surface, so that the cavity area on the parting surface can be suppressed even if the two-color molded body has a long shaft-shaped portion. As a result, it is possible to simultaneously mold a large number of two-color molded bodies each having a long shaft-shaped portion without increasing the size of the mold. It can be said that such an action and effect are largely caused by the action and effect of suppressing the cavity area with respect to the parting surface by forming the cavity extending in the direction orthogonal to the parting surface.

An injection molding device of the present invention made to achieve the above object is an injection molding device including the injection molding mold according to the present invention, and a movable mold rotation mechanism that performs clamping after causing the movable mold on the primary side separated at the parting surface to face the fixed mold on the secondary side and causing the movable mold on the secondary side to face the fixed mold on the primary side, the injection molding device further including the following configurations:
(4A) a slide core independent opening/closing mechanism that independently executes opening/closing of the movable-side slide core on the primary side and the secondary side being provided; and
(4B) the slide core independent opening/closing mechanism being configured to execute an operation by which only the slide core of the movable mold facing the secondary side is moved in the opening direction without moving the slide core of the movable mold facing the primary side in the opening/closing direction in mold opening and only the slide core of the movable mold facing the primary side is moved in the closing direction without moving the slide core of the movable mold facing the secondary side in the opening/closing direction in mold clamping.

In the injection molding device according to the present invention, the slide core independent opening/closing mechanism executes the opening/closing of the movable-side slide core on the primary side and that on the secondary side independently in such a manner that an operation by which only the slide core of the movable mold facing the secondary side is moved in the opening direction without moving the slide core of the movable mold facing the primary side in the opening/closing direction in mold opening and only the slide core of the movable mold facing the primary side is moved in the closing direction without moving the slide core of the movable mold facing the secondary side in the opening/closing direction in clamping. As a result, after the primary molding is finished, only the slide core of the fixed mold is opened and the slide core of the movable mold is kept closed, so that the mold opening can be executed while the primary molded body is held in a state of extending in the direction orthogonal to the parting surface by the slide core of the movable mold. In this state, the clamping is performed after the movable mold on the primary side is caused to face the fixed mold on the secondary side, and then the slide core of the fixed core is closed, so that the primary molded body can be set in the cavity for the secondary molding without taking out the primary molded body from the movable mold. In mold opening after the secondary molding has been completed, on the secondary side, the secondary molded body can be taken out by opening the slide cores on both the fixed side and the movable side. Thus, the movable mold from which the secondary molded body has been taken out is caused to face the fixed mold on the primary side and mold closing is performed, and each slide core is closed, whereby the primary molding can be executed again. By forming the cavity as described above, it is possible to simultaneously mold a large number of two-color molded bodies having a long shaft-shaped portion without increasing the size of the mold. In particular, in the case of using the injection molding mold also having the above-described configurations (2) and (3), it is possible to reliably prevent the primary molded body from falling off when a facing position is changed by the movable mold rotation mechanism.

An injection molding method of the present invention made to achieve the above object is an injection molding method that uses the injection molding device according to the present invention to manufacture the two-color molded body, the method repeatedly executes the following steps:
(Step 1) performing mold opening in such a manner that after injecting the first resin into the cavity on the primary side in the clamped state to be solidified, the slide cores of the fixed molds are opened on both the primary side and the secondary side and only the slide core of the movable mold on the secondary side is opened while the slide core of the movable mold on the primary side is closed;
(Step 2) switching mold facing states on the fixed side and the movable side in such a manner that after the mold opening operation has been completed, the movable mold located on the primary side faces the fixed mold on the secondary side and the movable mold located on the secondary side faces the fixed mold on the primary side;
(Step 3) performing clamping with the slide core of the movable mold that faces the primary side closed after the mold facing state switching operation has been completed, and closing the slide cores of the fixed molds on both the primary side and the secondary side;
(Step 4) performing mold opening in such a manner that after the first resin is injected into the cavity on the primary side in the clamped state and, the second resin is injected into the cavity on the secondary side in the clamped state to be solidified in both the primary side and the secondary side, the slide cores of the fixed molds are opened on both the primary side and the secondary side and only the slide core of the movable mold on the secondary side is opened while the slide core of the movable mold on the primary side is closed; and
(Step 5) taking out the two-color molded body in the middle of the mold opening operation or after the mold opening operation has been completed, and repeatedly executing Steps 2 to 4.

With the injection molding method of the present invention, the injection of the first resin and the injection of the second resin can be executed in parallel on each of the primary side and the secondary side, mold opening can be performed in a state where the primary molded body is held by the slide core of the movable mold, the two-color molded body can be taken out in parallel with the mold opening, and after the two-color molded body has been taken out, a series of operations of executing next primary molding and secondary molding in parallel is repeatedly executed, whereby the molding cycle can be shortened. In particular, in the case of using the injection molding device provided with the injection molding mold also having the above-described configurations (2) and (3), it is possible to reliably prevent the primary molded body from falling off when the facing position is changed by the movable mold rotation mechanism.

### EFFECTS OF THE INVENTION

With the present invention, a large number of two-color molded bodies can be manufactured in an efficient manner without increasing the size of the mold.

### BRIEF DESCRIPTION OF THE DRAWINGS

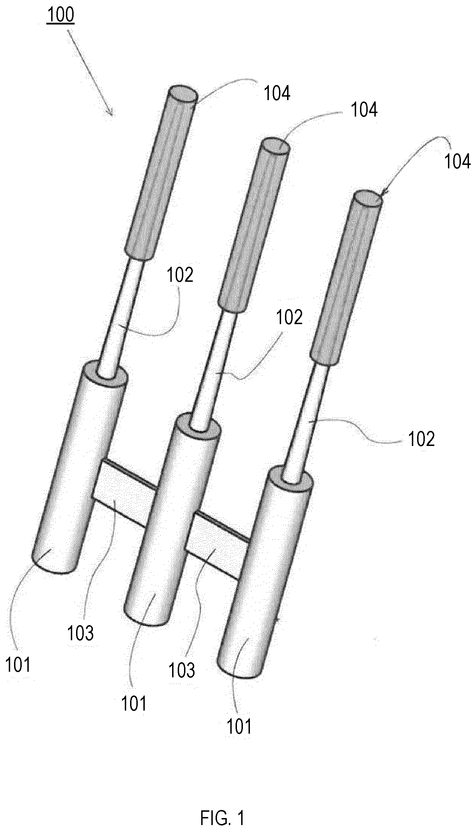

Fig. 1 is a perspective view of a two-color molded body to be molded in an example.

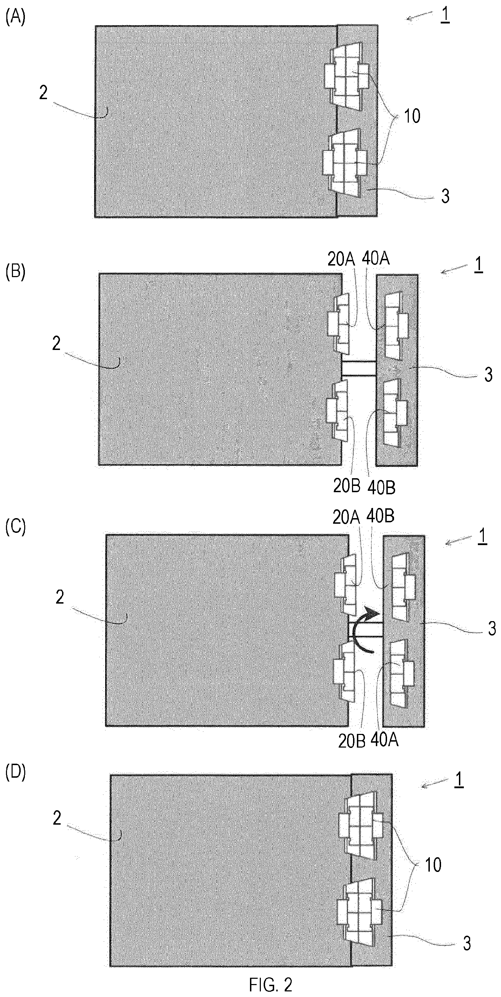

Fig. 2 illustrates a molding device according to the example; Fig. 2(A) is a cross-sectional view in a clamped state; Fig. 2(B) is a cross-sectional view in an opened state; Fig. 2(C) is a cross-sectional view in a state in which a movable side rotates; and Fig. 2(D) is a cross-sectional view in a clamped state after the rotation of the movable side.
Fig. 3 illustrates the molding device according to the embodiment; Fig. 3(A) is a front view illustrating a state in which a movable mold is attached to a rotary table; Fig. 3(B) is a cross-sectional view of the mold in a clamped state on a secondary side; and Fig. 3(C) is a cross-sectional view of the mold in a clamped state on a primary side.

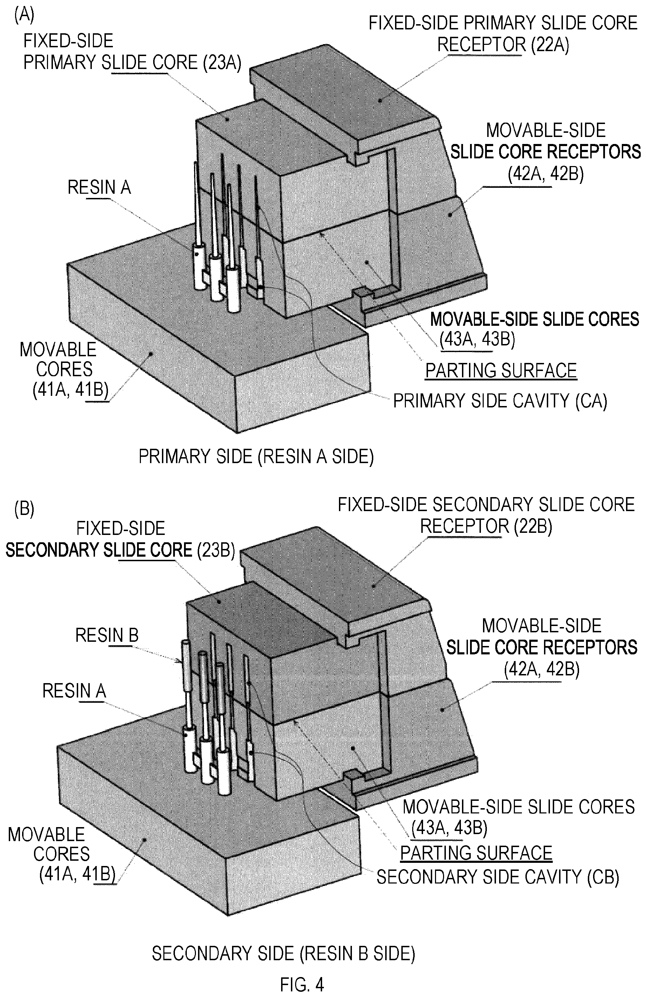

Fig. 4 illustrates the molding device according to the embodiment; Fig. 4(A) is an exploded perspective view in a state in which a primary-side cavity is formed; and Fig. 4(B) is an exploded perspective view in a state in which a secondary-side cavity is formed.
Fig. 5 illustrates a molding procedure by the molding device according to the embodiment; Fig. 5(A) is a cross-sectional view of a state in which molding is executed by closing the mold and injecting resin on each of the primary side and the secondary side; Fig. 5(B) is a cross-sectional view in a state in which a fixed-side slide core is opened; and Fig. 5(C) is a cross-sectional view in a state in which the movable mold is moved to perform mold opening.

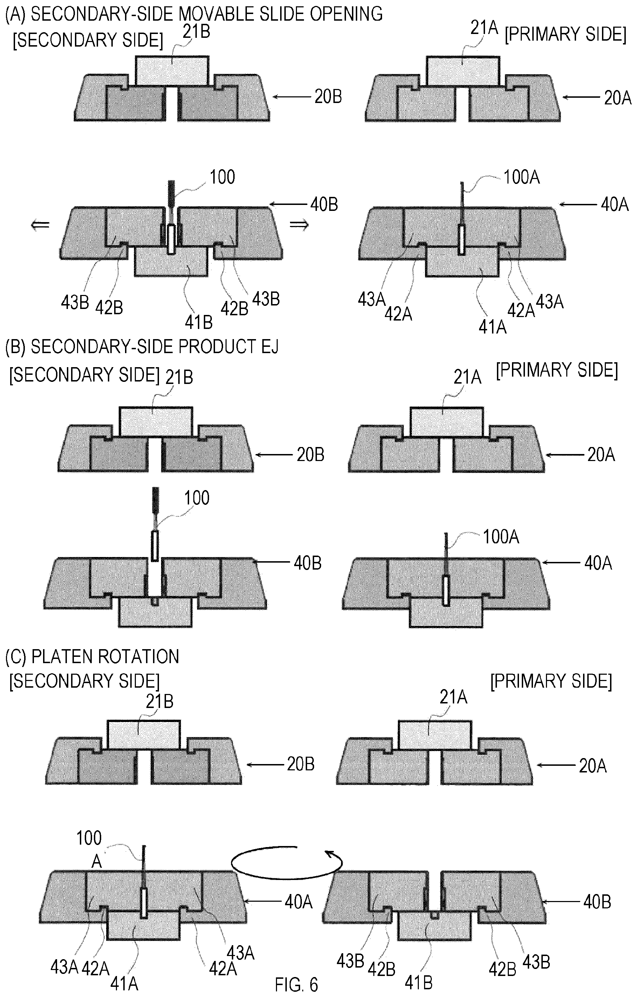

Fig. 6 illustrates a molding procedure by the molding device according to the example; Fig. 6(A) is a cross-sectional view in a state where only the movable side slide core on the secondary side is opened; Fig. 6(B) is a cross-sectional view in a state where the molded body is taken out from the secondary side; and Fig. 6(C) is a cross-sectional view in a state where the movable mold is rotated at a mold opening position.

### MODE FOR CARRYING OUT THE INVENTION

Hereinafter specific examples as embodiments of the present invention will be described in detail with reference to the drawings.

### [Example 1]

As illustrated in Fig. 1, a two-color molded body 100 manufactured in the present example includes a large-diameter shaft portions 101, 101, 101, small-diameter shaft portions 102, 102, 102, thin connection portions 103, 103 connecting the large-diameter shaft portions 101, and covering portions 104, 104, 104. The large-diameter shaft portions 101, 101, 101, the small-diameter shaft portions 102, 102, 102, and the thin connection portions 103, 103 are a primary molded body of a hard resin injected and integrally molded, and the covering portions 104, 104, 104 are a secondary molded body of a soft resin melted on and integrated with surfaces in a predetermined range from the tips of the small-diameter shaft portions 102, 102, 102.

As illustrated in Fig. 2, an injection molding machine 1 of the present example includes a molding machine main body 2, a rotary table 3, and a molding mold 10. The molding mold 10 includes fixed molds 20A, 20B attached to the molding machine main body 2 and movable molds 40A, 40B attached to the rotary table 3, and is clamped and opened by an operation of the rotary table 3 in the axial direction. The fixed mold 20A is configured to perform primary molding, and the fixed mold 20B is configured to perform secondary molding, and both have cavities with different shapes. In contrast, the movable molds 40A, 40B have cavities with the same shape. The rotary table 3 rotates in units of 180 degrees at a mold opening position, and the movable mold 40A facing the fixed mold 20A on the primary side before rotation is brought into a state of facing the fixed mold 20B on the secondary side. At this time, the movable mold 40B facing the fixed mold 20B on the secondary side before rotation faces the fixed mold 20A on the primary side. Thereafter, the rotary table 3 is moved to a clamping position.

As illustrated in Fig. 3(A), the movable molds 40A, 40B are mounted on the side of the rotary table 3 facing the molding machine main body 2 so as to be symmetrically positioned with respect to a rotation center and face the fixed molds 20A, 20B. The fixed molds 20A, 20B are similarly mounted on the side of the molding machine main body 2 facing the rotary table 3 so as to be symmetrically positioned with respect to the rotation center of the rotary table 3 and face the movable molds 40A, 40B.

As illustrated in Figs. 3(B), 3(C), the fixed molds 20A, 20B include fixed-side core blocks 21A, 21B fixed to the molding machine main body 2, a pair of slide core receptors 22A, 22B, and a pair of slide cores 23A, 23B. As illustrated in Figs. 3(B), 3(C), the movable molds 40A, 40B include movable-side core blocks 41A, 41B fixed to the rotary table 3, a pair of slide core receptors 42A, 42B, and a pair of slide cores 43A, 43B.

As illustrated in Fig. 4(A), a primary-side cavity CA is formed on the primary side, the primary-side cavity CA being configured to form the primary molded body made of a hard resin by the fixed-side slide core 23A and the movable-side slide core 43A (43B). As illustrated in Fig. 4(B), a secondary-side cavity CB is formed on the secondary side, the secondary-side cavity CB having a recess configured to accommodate therein the primary molded body made of a hard resin and to form the secondary molded body made of a soft resin by the fixed-side slide core 23B and the movable-side slide core 43A (43B). As illustrated in the drawing, the recess for secondary molding in the secondary-side cavity CA is formed only in the fixed mold slide core 23B, and is not formed in the movable-side slide cores 43A, 43B. The recess formed in the movable-side slide core 43A (43B) is configured to encapsulate the large-diameter shaft portions 101 and the thin connection portions 103. As a result, when the movable-side slide core 43A (43B) is closed, a primary molded body 100A is prevented from falling off.

Here, one of the characteristic configurations of the present example is that the primary-side cavity CA and the secondary-side cavity CB are formed to extend in a direction orthogonal to the parting surfaces of the fixed molds 20A, 20B and the movable molds 40A, 40B.

Next, a procedure for executing two-color molding using the molding device 1 according to the example will be described. As illustrated in Fig. 5(A), in a state where the molds on the primary side and the secondary side are closed, a resin A is injected into the cavity on the primary side, and a resin B is injected into the cavity on the secondary side. The drawing illustrates a state in which the fixed mold 20A and the movable mold 40A are clamped at the parting line PL forming the parting surface on the primary side, and the fixed mold 20B and the movable mold 40B are clamped at the parting line PL forming the parting surface on the secondary side, and in this state, the resin A is injected into the primary-side cavity to mold the primary molded body 100A, and at the same time, the resin B is injected into the distal end portion of the primary molded body set in the secondary-side cavity to mold the two-color molded body 100.

When the resins A and B having been injected are solidified and the mold becomes openable, as illustrated in Fig. 5(B), the slide cores 23A, 23A on the fixed side are opened on the primary side, and the slide cores 23B, 23B on the fixed side are also opened on the secondary side. At this time, the fixed molds 20A, 20B and the movable molds 40A, 40B remain in the clamped state.

Thereafter, the rotary table 3 is moved to the mold opening position, and the parting line PL is opened as illustrated in Fig. 5(C). At this time, the slide cores 43A, 43B of the movable molds 40A, 40B remain closed. Therefore, as illustrated in Fig. 5(C), the mold opening is executed in a state where both the primary molded body 100A and the two-color molded body 100 are held by the slide cores 43A, 43B of the movable molds 40A, 40B.

Next, in the mold opening state in which the parting line PL is opened, as illustrated in Fig. 6(A), the slide cores 43B, 43B are opened only for the movable mold 40B facing the secondary side. Subsequently, as illustrated in Fig. 6(B), the two-color molded body 100 for which the secondary molding has been completed is taken out. At this time, since the slide cores 43A, 43A of the movable mold 40A facing the primary side are kept closed, the primary molded body 100A is kept held by the movable mold 40A.

After the two-color molded body 100 for which the secondary molding has been completed is taken out, the rotary table 3 is rotated by 180 degrees. As a result, as illustrated in Fig. 6(C), the movable mold 40A holding the primary molded body 100A faces the fixed mold 20B on the secondary side, and the movable mold 40B from which the two-color molded body 100 has been taken out faces the fixed mold 20A on the primary side.

Hereinafter, the molds are clamped to form the primary-side cavity CA and the secondary-side cavity CB, and then the procedures of Figs. 5(A) to 5(C) and Figs. 6(A) to 6(C) are repeatedly executed.

Here, since the slide cores 23A, 23B on the fixed side may be operated to start to open at the same time as the mold opening and to start to close at the same time as the mold clamping, an angular pin not requiring a power source can be used.

On the other hand, the slide cores 43A, 43B on the movable side need to be opened only in mold opening at a secondary side position and remain closed in mold opening at a primary side position. Furthermore, the slide cores 43A, 43B on the movable side need to be operated from the open state to the closed state in mold clamping at the primary side position. It is difficult to perform such an operation with an angular pin.

As a means for causing the slide cores 43A, 43B on the movable side to execute independent operations on the primary side and the secondary side as described above, a method using an actuator such as an air cylinder, a motor, or a solenoid can be considered, but a mechanical mechanism is desired from the viewpoint of suppressing an increase in size of the molding machine.

The present invention is not limited to the example, and various modifications can be made without departing from the gist of the present invention.

For example, the present invention is not limited to a molded body in which a plurality of shaft-shaped members are connected, and the present invention may be applied to two-color molding of a single molded article having an undercut portion.

### INDUSTRIAL APPLICABILITY

The present invention can be used in two-color molding.

### EXPLANATION OF REFERENCE NUMERALS

1...injection molding machine, 2...molding machine main body, 3...rotary table, 10...molding mold, 20A, 20B...fixed mold, 21A, 21B...fixed-side core block, 22A, 22B...slide core receptor, 23A, 23B...slide core, 40A, 40B...movable mold, 41A, 41B...movable-side core block, 42A, 42B...slide core receptor, 43A, 43B...slide core, 100...two-color molded body, 100A...primary molded body, 101...large-diameter shaft portion, 102...small-diameter shaft portion, 103...thin connecting portion, 104...covering portion, CA...primary-side cavity, CB...secondary-side cavity, PL... parting line.

## Claims

1. An injection molding mold (10) for manufacturing a two-color molded body (100), the injection molding mold comprising a fixed mold (20A, 20B) and a movable mold (40A, 40B) that are separated at a parting surface, the fixed mold and the movable mold being respectively provided on a primary side on which primary molding with a first resin is performed and on a secondary side on which secondary molding with a second resin is performed, wherein after the movable mold on the primary side separated at the parting surface is caused to face the fixed mold on the secondary side and the movable mold on the secondary side is caused to face the fixed mold on the primary side, clamping is performed and the second resin is injected so as to cover a partial surface of a primary molded body (100A) formed of the first resin, the injection molding mold being **characterised by** further comprising the following configurations:
(1A) the fixed mold and the movable mold each including slide cores (23A, 23B, 43A, 43B) configured to open and close along the parting surface, each of the slide cores being provided with, in a mating surface in a clamped state, a recess configured to form a cavity extending in a direction orthogonal to the parting surface; and
(1B) a portion configured to inject the second resin being provided in the recess in the slide core of the fixed mold.

2. The injection molding mold according to claim 1, further comprising the following configuration:
(2) the primary molded body including: a shaft member (102) extending in a direction orthogonal to the parting surface; and a bulging portion (101) bulging from a part of the shaft member, and a recess configured to encapsulate the bulging portion being formed in the mating surface between the slide cores of the movable mold.

3. The injection molding mold according to claim 2, further comprising the following configuration:
(3) the primary molded body including a plurality of the shaft members, and the bulging portion being a connecting member (103) that connects the shaft members along the parting surface.

4. An injection molding device (1) comprising:
the injection molding mold according to any one of claims 1 to 3; and
a movable mold rotation mechanism (3, 40A, 40B) that performs clamping after causing the movable mold on the primary side separated at the parting surface to face the fixed mold on the secondary side and causing the movable mold on the secondary side to face the fixed mold on the primary side,
the injection molding device further comprising the following configurations:
(4A) a slide core independent opening/closing mechanism that independently executes opening/closing of the movable-side slide core on the primary side and the secondary side being provided; and
(4B) the slide core independent opening/closing mechanism being configured to execute an operation by which only the slide core of the movable mold facing the secondary side is moved in the opening direction without moving the slide core of the movable mold facing the primary side in the opening/closing direction in mold opening and only the slide core of the movable mold facing the primary side is moved in the closing direction without moving the slide core of the movable mold facing the secondary side in the opening/closing direction in mold clamping.

5. An injection molding method that uses the injection molding device according to claim 4 to manufacture the two-color molded body, the method repeatedly executing the following steps:
(Step 1) performing mold opening in such a manner that after injecting the first resin into the cavity on the primary side in the clamped state to be solidified, the slide cores of the fixed molds are opened on both the primary side and the secondary side and only the slide core of the movable mold on the secondary side is opened while the slide core of the movable mold on the primary side is closed;
(Step 2) switching mold facing states on the fixed side and the movable side in such a manner that after the mold opening operation has been completed, the movable mold located on the primary side faces the fixed mold on the secondary side and the movable mold located on the secondary side faces the fixed mold on the primary side;
(Step 3) performing clamping with the slide core of the movable mold that faces the primary side closed after the mold facing state switching operation has been completed, and closing the slide cores of the fixed molds on both the primary side and the secondary side;
(Step 4) performing mold opening in such a manner that after the first resin is injected into the cavity on the primary side in the clamped state and, the second resin is injected into the cavity on the secondary side in the clamped state to be solidified in both the primary side and the secondary side, the slide cores of the fixed molds are opened on both the primary side and the secondary side and only the slide core of the movable mold on the secondary side is opened while the slide core of the movable mold on the primary side is closed; and
(Step 5) taking out the two-color molded body in the middle of the mold opening operation or after the mold opening operation has been completed, and repeatedly executing Steps 2 to 4.

## Patentansprüche

1. Form zum Spritzgießen (10) zum Herstellen eines zweifarbigen Formkörpers (100), wobei die Form zum Spritzgießen eine feste Form (20A,20B) und eine bewegliche Form (40A, 40B) umfasst, die an einer Teilungsfläche voneinander getrennt sind, wobei die feste Form und die bewegliche Form jeweils auf einer primären Seite, auf der das primäre Gießen mit einem ersten Harz ausgeführt wird, und auf einer sekundären Seite, auf der das sekundäre Gießen mit einem zweiten Harz ausgeführt wird, vorgesehen sind, wobei, nachdem die bewegliche Form auf der primären Seite, die an der Teilungsfläche getrennt ist, dazu gebracht wird, der festen Form auf der sekundären Seite zugewandt zu sein, und die bewegliche Form auf der sekundären Seite dazu gebracht wird, der festen Form auf der primären Seite zugewandt zu sein, ein Einspannvorgang ausgeführt wird und das zweite Harz eingespritzt wird, um eine Teilfläche eines primären Formkörpers (100A), der aus dem ersten Harz ausgebildet ist, zu bedecken, wobei die Form zum Spritzgießen **dadurch gekennzeichnet ist, dass** sie ferner die folgenden Konfigurationen umfasst:
(1A) die feste Form und die bewegliche Form umfassen jeweils Gleitkerne (23A, 23B, 43A, 43B), die dazu ausgelegt sind, entlang der Teilungsfläche öffenbar und schließbar zu sein, wobei jeder der Gleitkerne in einer Passfläche in einem eingespannten Zustand mit einer Aussparung versehen sind, um einen Hohlraum auszubilden, der sich in eine Richtung senkrecht zur Teilungsfläche erstreckt; und
(1B) ein Abschnitt, der dazu ausgelegt ist, das zweite Harz einzuspritzen, in der Aussparung im Gleitkern der festen Form vorgesehen ist.

2. Form zum Spritzgießen nach Anspruch 1, ferner die folgende Konfiguration umfassend:
(2) der primäre Formkörper umfasst Folgendes: ein Schaftelement (102), das sich in eine Richtung senkrecht zur Teilungsfläche erstreckt; und einen Wölbungsabschnitt (101), der sich von einem Teil des Schaftelements wölbt, und eine Aussparung, die dazu ausgelegt ist, den Wölbungsabschnitt zu umschließen, die in der Passfläche zwischen den Gleitkernen der beweglichen Form ausgebildet ist.

3. Form zum Spritzgießen nach Anspruch 2, ferner die folgende Konfiguration umfassend:
(3) der primäre Formkörper umfasst mehrere Schaftelemente und der Wölbungsabschnitt ist ein Verbindungselement (103), das die Schaftelemente entlang der Teilungsfläche verbindet.

4. Spritzgießvorrichtung (1), umfassend:
die Form zum Spritzgießen nach einem der Ansprüche 1 bis 3 und
einen Drehmechanismus (3, 40A, 40B) für die bewegliche Form, der, nachdem die bewegliche Form auf der primären Seite, die an der Teilungsfläche getrennt ist, dazu gebracht wird, der festen Form auf der sekundären Seite zugewandt zu sein und die bewegliche Form auf der sekundären Seite dazu gebracht wird, der festen Form auf der primären Seite zugewandt zu sein, einen Einspannvorgang ausführt,
wobei die Spritzgießvorrichtung ferner die folgenden Konfigurationen umfasst:
(4A) einen vom Gleitkern unabhängigen Öffnungs-/Schließmechanismus, der unabhängig einen Öffnungs-/Schließvorgang des Gleitkerns auf der beweglichen Seite auf der primären Seite und der sekundären Seite ausführt; und
(4B) wobei der vom Gleitkern unabhängige Öffnungs-/Schließmechanismus dazu ausgelegt ist, einen Vorgang auszuführen, mittels dessen nur der Gleitkern der beweglichen Form, die der sekundären Seite zugewandt ist, in die Öffnungsrichtung bewegt wird, ohne den Gleitkern der beweglichen Form, die der primären Seite zugewandt ist, in die Öffnungs-/Schließrichtung beim Öffnen der Form zu bewegen, und wobei nur der Gleitkern der beweglichen Form, die der primären Seite zu gewandt ist, in die Schließrichtung bewegt wird, ohne den Gleitkern der beweglichen Form, die der sekundären Seite zu gewandt ist, in die Öffnung-/Schließrichtung beim Einspannen der Form zu bewegen.

5. Spritzgießverfahren, das die Spritzgießvorrichtung nach Anspruch 4 verwendet, um den zweifarbigen Formkörper herzustellen, wobei das Verfahren wiederholt die folgenden Schritte ausführt:
(Schritt 1) Ausführen eines Formöffnungsvorgangs derart, dass nach dem Einspritzen des ersten Harzes in den Hohlraum auf der primären Seite im eingespannten Zustand zum Aushärten die Gleitkerne der festen Formen sowohl auf der primären Seite als auch der sekundären Seite geöffnet werden und nur der Gleitkern der beweglichen Form auf der sekundären Seite geöffnet wird, während der Gleitkern der beweglichen Form auf der primären Seite geschlossen ist;
(Schritt 2) Wechseln der Formzuwendungszustände auf der festen Seite und der beweglichen Seite derart, dass nach dem Abschluss des Formöffnungsvorgangs die bewegliche Form, die sich auf der primären Seite befindet, der festen Form auf der sekundären Seite zugewandt ist und die bewegliche Form, die sich auf der sekundären Seite befindet, der festen Form auf der primären Seite zugewandt ist;
(Schritt 3) Ausführen eines Einspannvorgangs mit dem Gleitkern der beweglichen Form, die der primären Seite zugewandt ist, im geschlossenen Zustand, nachdem der Formzuwendungszustandswechselvorgang abgeschlossen ist, und Schließen der Gleitkerne der festen Formen sowohl auf der primären Seite als auch der sekundären Seite;
(Schritt 4) Ausführen eines Formöffnungsvorgangs derart, dass nach dem Einspritzen des ersten Harzes in den Hohlraum auf der primären Seite im eingespannten Zustand und dem Einspritzen des zweiten Harzes in den Hohlraum auf der sekundären Seite im eingespannten Zustand zum Aushärten sowohl auf der primären Seite als auch der sekundären Seite, die Gleitkerne der festen Formen sowohl auf der primären Seite als auch der sekundären Seite geöffnet werden und nur der Gleitkern der beweglichen Form auf der sekundären Seite geöffnet wird, während der Gleitkern der beweglichen Form auf der primären Seite geschlossen ist; und
(Schritt 5) Herausnehmen des zweifarbigen Formkörpers in der Mitte des Formöffnungsvorgangs oder nach Abschluss des Formöffnungsvorgangs und wiederholtes Ausführen der Schritte 2 bis 4.

## Revendications

1. Moule de moulage par injection (10) pour fabriquer un corps moulé bicolore (100), le moule de moulage par injection comprenant un moule fixe (20A, 20B) et un moule mobile (40A, 40B) séparés au niveau d'une surface de séparation, le moule fixe et le moule mobile étant respectivement disposés sur un côté primaire sur lequel un moulage primaire avec une première résine est effectué et sur un côté secondaire sur lequel un moulage secondaire avec une seconde résine est effectué, un serrage étant effectué, après que le moule mobile du côté primaire séparé au niveau de la surface de séparation a été amené à faire face au moule fixe du côté secondaire et que le moule mobile du côté secondaire a été amené à faire face au moule fixe du côté primaire, et la seconde résine étant injectée de manière à recouvrir une surface partielle d'un corps moulé primaire (100A) formé de la première résine, le moule de moulage par injection étant **caractérisé en ce qu'**il comprend en outre les configurations suivantes :
(1A) le moule fixe et le moule mobile comprennent chacun des noyaux coulissants (23A, 23B, 43A, 43B) configurés pour s'ouvrir et se fermer le long de la surface de séparation, chacun des noyaux coulissants étant pourvu, dans une surface d'accouplement à l'état serré, d'un évidement configuré pour former une cavité s'étendant dans une direction orthogonale à la surface de séparation ; et
(1B) une partie configurée pour injecter la seconde résine est prévue dans l'évidement dans le noyau coulissant du moule fixe.

2. Moule de moulage par injection selon la revendication 1, comprenant en outre la configuration suivante :
(2) le corps moulé primaire comprend : un élément constituant une tige (102) s'étendant dans une direction orthogonale à la surface de séparation ; et une partie proéminente (101) faisant saillie à partir d'une partie de l'élément constituant une tige, et un évidement configuré pour encapsuler la partie proéminente est formé dans la surface d'accouplement entre les noyaux coulissants du moule mobile.

3. Moule de moulage par injection selon la revendication 2, comprenant en outre la configuration suivante :
(3) le corps moulé primaire comprend une pluralité des éléments constituant des tiges, et la partie proéminente est un élément de raccordement (103) qui relie les éléments constituant des tiges le long de la surface de séparation.

4. Dispositif de moulage par injection (1) comprenant :
le moule de moulage par injection selon l'une quelconque des revendications 1 à 3 ; et
un mécanisme de rotation de moule mobile (3, 40A, 40B) qui effectue le serrage après avoir amené le moule mobile du côté primaire séparé au niveau de la surface de séparation à faire face au moule fixe du côté secondaire et le moule mobile du côté secondaire à faire face au moule fixe du côté primaire,
le dispositif de moulage par injection comprenant en outre les configurations suivantes :
(4A) un mécanisme d'ouverture/de fermeture indépendante du noyau coulissant qui exécute indépendamment l'ouverture/la fermeture du noyau coulissant du côté mobile sur le côté primaire et le côté secondaire est prévu ; et
(4B) le mécanisme d'ouverture/de fermeture indépendante du noyau coulissant est configuré pour exécuter une opération par laquelle seul le noyau coulissant du moule mobile faisant face au côté secondaire est déplacé dans la direction d'ouverture sans déplacer le noyau coulissant du moule mobile faisant face au côté primaire dans la direction d'ouverture/de fermeture lors de l'ouverture du moule et seul le noyau coulissant du moule mobile faisant face au côté primaire est déplacé dans la direction de fermeture sans déplacer le noyau coulissant du mobile moule faisant face au côté secondaire dans la direction d'ouverture/de fermeture lors du serrage du moule.

5. Procédé de moulage par injection qui utilise le dispositif de moulage par injection selon la revendication 4 pour fabriquer le corps moulé bicolore, le procédé exécutant de manière répétée les étapes suivantes :
(Étape 1) effectuer l'ouverture du moule de telle sorte qu'après l'injection de la première résine dans la cavité du côté primaire à l'état serré pour sa solidification, les noyaux coulissants des moules fixes soient ouverts du côté primaire et du côté secondaire et que seul le noyau coulissant du moule mobile du côté secondaire soit ouvert tandis que le noyau coulissant du moule mobile du côté primaire est fermé ;
(Étape 2) changer les orientations des moules sur le côté fixe et le côté mobile de telle sorte qu'une fois l'opération d'ouverture du moule terminée, le moule mobile situé sur le côté primaire fasse face au moule fixe sur le côté secondaire et le moule mobile situé sur le côté secondaire fasse face au moule fixe sur le côté primaire ;
(Étape 3) effectuer le serrage avec le noyau coulissant du moule mobile qui fait face au côté primaire fermé une fois l'opération de changement d'orientation des moules terminée, et fermer les noyaux coulissants des moules fixes sur le côté primaire et le côté secondaire ;
(Étape 4) effectuer l'ouverture du moule de telle manière qu'après l'injection de la première résine dans la cavité du côté primaire à l'état serré et l'injection de la seconde résine dans la cavité du côté secondaire à l'état serré pour leur solidification à la fois du côté primaire et du côté secondaire, les noyaux coulissants des moules fixes soient ouverts sur le côté primaire et le côté secondaire et seul le noyau coulissant du moule mobile sur le côté secondaire soit ouvert tandis que le noyau coulissant du moule mobile sur le côté primaire est fermé ; et
(Étape 5) extraire le corps moulé bicolore au milieu de l'opération d'ouverture du moule ou une fois l'opération d'ouverture du moule terminée, et exécuter de manière répétée les Étapes 2 à 4.
